(19) Europäisches Patentamt

European Patent Office

Office européen des brevets

(11) **EP 4 001 170 B1**

(12) **EUROPÄISCHE PATENTSCHRIFT**

(45) Veröffentlichungstag und Bekanntmachung des Hinweises auf die Patenterteilung:
**08.01.2025 Patentblatt 2025/02**

(21) Anmeldenummer: **21208438.8**

(22) Anmeldetag: **16.11.2021**

(51) Internationale Patentklassifikation (IPC):
*B65D 90/511* (2019.01)   *F17C 13/02* (2006.01)
*G01F 23/18* (2006.01)   *B65D 90/48* (2006.01)
*G01F 23/16* (2006.01)   *G01F 23/64* (2006.01)
*G01F 23/80* (2022.01)

(52) Gemeinsame Patentklassifikation (CPC):
**G01F 23/64; G01F 23/168; G01F 23/18;**
**G01F 23/80;** F17C 13/02; F17C 13/025;
F17C 2223/013; F17C 2223/0153; F17C 2223/0161;
F17C 2223/0169; F17C 2250/0408;
F17C 2250/0413; F17C 2250/0417; F17C 2250/043

(54) **VORRICHTUNG ZUR ERMITTLUNG EINES FÜLLSTANDS EINER FLÜSSIGKEIT IN EINEM BEHÄLTER**

DEVICE FOR MEASURING A LIQUID FILL LEVEL IN A CONTAINER

DISPOSITIF DE DÉTERMINATION DU NIVEAU DE REMPLISSAGE D'UN LIQUIDE DANS UN RÉCIPIENT

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **23.11.2020 DE 102020214695**

(43) Veröffentlichungstag der Anmeldung:
**25.05.2022 Patentblatt 2022/21**

(73) Patentinhaber: **Micro-Sensys GmbH 99098 Erfurt (DE)**

(72) Erfinder:
• **JURISCH, Reinhard 99438 Meckfeld bei Bad Berka (DE)**
• **PEITSCH, Peter 99099 Erfurt (DE)**
• **JÄGER, Sylvo 99098 Erfurt (DE)**

(74) Vertreter: **Liedtke & Partner Patentanwälte Gerhart-Hauptmann-Straße 10/11 99096 Erfurt (DE)**

(56) Entgegenhaltungen:
CN-A- 107 576 314     CN-U- 210 953 010
DE-A1- 102016 210 416     US-A1- 2010 017 152
US-A1- 2013 054 159     US-B1- 7 470 060

**Beschreibung**

Die Erfindung betrifft eine Vorrichtung zur Ermittlung eines Füllstands einer Flüssigkeit in einem Behälter.

Aus dem Stand der Technik sind Vorrichtungen zur Ermittlung eines Füllstands einer Flüssigkeit in einem Behälter mittels mindestens eines Drucksensors allgemein bekannt.

In der CN 210953010 U wird eine Ölstandsmessvorrichtung beschrieben. Die Vorrichtung umfasst einen Drucksensor, der in einem Öltank angeordnet ist und zum Sammeln von Öldruckänderungsdaten in dem Öltank verwendet wird. Ein drahtloses Übertragungsmodul ist in dem Öltank angeordnet, mit dem Drucksensor verbunden und wird zum Senden der vom Drucksensor erfassten Öldruckänderungsdaten an ein Internet-Terminal außerhalb des Öltanks verwendet.

In der CN 107576314 A wird eine automatische Schwimmer-Überwachungsausrüstung zur Überwachung von Flüssen und Seen einer menschenleeren Zone beschrieben. Die Ausrüstung umfasst eine Schwimmkugel, ein multifunktionales Festmacherkabel und eine Unterwasservorrichtung, wobei die Schwimmkugel, das multifunktionale Festmacherkabel und die Unterwasservorrichtung in Reihe miteinander verbunden sind. An der Oberseite der Schwimmkugel ist eine Kommunikationsausrüstung angeordnet. An der Unterseite der Schwimmkugel sind ein Strömungsgeschwindigkeitssensor, ein Wassertemperatursensor und ein Wasserqualitätssensor angeordnet. Der äußere Teil der Schwimmkugel besteht aus einem Solarzellenpanel. Ein Wasseroberflächendrucksensor und ein Wasserbodendrucksensor sind so angeordnet, dass Wasserstände durch Druckunterschiede gemessen werden.

In der US 2013/054159 A1 wird ein drahtloses Tankfüllstandsüberwachungssystem beschrieben. Das Erfassen eines Flüssigkeitspegels in einem Flüssigkeitsbehälter erfolgt durch Anordnen eines drahtlosen Flüssigkeitssensormoduls in dem Flüssigkeitsbehälter, Messen mindestens einer Eigenschaft einer Flüssigkeit in dem Flüssigkeitsbehälter und drahtloses Übertragen der gemessenen mindestens einen Eigenschaft an einen Empfänger, der außerhalb des Fluidbehälters angeordnet ist.

Der Erfindung liegt die Aufgabe zu Grunde, eine gegenüber dem Stand der Technik verbesserte Vorrichtung zur Ermittlung eines Füllstands einer Flüssigkeit in einem Behälter anzugeben.

Die Aufgabe wird erfindungsgemäß gelöst durch eine Vorrichtung zur Ermittlung eines Füllstands einer Flüssigkeit in einem Behälter mit den Merkmalen des Anspruchs 1.

Vorteilhafte Ausgestaltungen der Erfindung sind Gegenstand der Unteransprüche.

Eine Vorrichtung zur Ermittlung eines Füllstands einer Flüssigkeit in einem Behälter umfasst eine Taucheinheit mit einer Drucksensoreinheit und einer Sendeeinheit. Die Drucksensoreinheit und die Sendeeinheit sind insbesondere jeweils an oder in einem Tauchkörper der Taucheinheit angeordnet. Des Weiteren umfasst die Vorrichtung eine Schwimmeinheit mit einer weiteren Drucksensoreinheit und einer als eine Funksendeeinheit ausgebildeten weiteren Sendeeinheit. Erfindungsgemäß ist die weitere Drucksensoreinheit an oder in einem Schwimmkörper der Schwimmeinheit derart angeordnet, dass sie bei in der Flüssigkeit, für deren Füllstandsermittlung die Vorrichtung vorgesehen ist, angeordneter Schwimmeinheit unter der Oberfläche der Flüssigkeit angeordnet ist.

In einer nicht erfindungsgemäßen Ausführungsform ist die Sendeeinheit der Taucheinheit als eine Funksendeeinheit ausgebildet.

Erfindungsgemäß ist die Sendeeinheit der Taucheinheit als eine Ultraschallsendeeinheit oder als eine Lichtsignalsendeeinheit ausgebildet.

Es kann vorgesehen sein, dass mittels der Drucksensoreinheit der Taucheinheit ermittelte Druckwerte direkt an eine Ausleseeinheit übertragen werden. Hierzu ist die Sendeeinheit der Taucheinheit in einer nicht erfindungsgemäßen Ausführungsform vorteilhafterweise als Funksendeeinheit ausgebildet. Erfindungsgemäß ist vorgesehen, dass die mittels der Drucksensoreinheit der Taucheinheit ermittelten Druckwerte an die Schwimmeinheit übertragen werden. Hierzu ist die Sendeeinheit der Taucheinheit erfindungsgemäß als Ultraschallsendeeinheit oder Lichtsignalsendeeinheit ausgebildet. Bei dieser erfindungsgemäßen Ausführungsform der Vorrichtung weist die Schwimmeinheit eine als Ultraschallempfangseinheit oder als Lichtsignalempfangseinheit ausgebildete Empfangseinheit zum Empfang der mittels der Drucksensoreinheit der Taucheinheit ermittelten Druckwerte auf, d. h. eine als Ultraschallempfangseinheit ausgebildete Empfangseinheit, wenn die Sendeeinheit der Taucheinheit als Ultraschallsendeeinheit ausgebildet ist, bzw. eine als Lichtsignalempfangseinheit ausgebildete Empfangseinheit, wenn die Sendeeinheit der Taucheinheit als Lichtsignalsendeeinheit ausgebildet ist. Die Empfangseinheit ist insbesondere als eine Low-Power-Empfangseinheit ausgebildet, d. h. insbesondere als eine Empfangseinheit mit einem niedrigen Energieverbrauch. Die Empfangseinheit realisiert insbesondere eine Wake-up-Funktion, d. h. eine Aufwach- und/oder Aktivierungsfunktion, für eine restliche Schaltung der Schwimmeinheit.

Mittels der als Funksendeeinheit ausgebildeten weiteren Sendeeinheit der Schwimmeinheit werden beispielsweise mittels der weiteren Drucksensoreinheit der Schwimmeinheit ermittelte Druckwerte an die Ausleseeinheit übertragen. Werden die mittels der Drucksensoreinheit der Taucheinheit ermittelten Druckwerte an die Schwimmeinheit übertragen, dann werden vorteilhafterweise auch diese Druckwerte mittels der als Funksendeeinheit ausgebildeten weiteren Sendeeinheit der Schwimmeinheit an die Ausleseeinheit übertragen. In diesem Fall sowie ebenfalls in dem Fall, dass die mittels der weiteren Drucksensoreinheit der Schwimmeinheit ermittelte Druckwerte mittels der als Funksendeeinheit ausgebildeten weiteren Sendeeinheit der Schwimmeinheit an die Ausleseeinheit übertragen werden und die mittels der Drucksensoreinheit der Taucheinheit ermittelten Druckwerte mittels der nicht erfindungsgemäß als Funksendeeinheit ausgebildeten Sendeeinheit der Taucheinheit direkt an die Ausleseeinheit übertragen werden, wird vorteilhafterweise in der Ausleseeinheit eine Füllstandshöhe der Flüssigkeit in dem Behälter aus mindestens einem mittels der Drucksensoreinheit der Taucheinheit ermittelten Druckwert und mindestens einem mittels der weiteren Drucksensoreinheit der Schwimmeinheit ermittelten Druckwert ermittelt. Zu diesem Zweck umfasst die Ausleseeinheit vorteilhafterweise eine entsprechende Ermittlungseinheit. Alternativ kann für den Fall, dass die mittels der Drucksensoreinheit der Taucheinheit ermittelten Druckwerte mittels der als Ultraschallsendeeinheit oder Lichtsignalsendeeinheit ausgebildet Sendeeinheit der Taucheinheit an die Schwimmeinheit übertragen werden, beispielsweise vorgesehen sein, dass in der Schwimmeinheit die Füllstandshöhe der Flüssigkeit in dem Behälter aus mindestens einem mittels der Drucksensoreinheit der Taucheinheit ermittelten Druckwert und mindestens einem mittels der weiteren Drucksensoreinheit der Schwimmeinheit ermittelten Druckwert ermittelt wird. Zu diesem Zweck umfasst die Schwimmeinheit vorteilhafterweise eine entsprechende Ermittlungseinheit. In diesem Fall wird dann vorteilhafterweise die ermittelte Füllstandshöhe der Flüssigkeit in dem Behälter mittels der als Funksendeeinheit ausgebildeten weiteren Sendeeinheit der Schwimmeinheit an die Ausleseeinheit übertragen.

Die Ausleseeinheit ist in einer möglichen Ausführungsform der Vorrichtung ein Bestandteil der Vorrichtung. Sie ist beispielsweise als ein Mobiltelefon ausgebildet, insbesondere als ein Smartphone. Alternativ kann die Ausleseeinheit beispielsweise als ein Computer, insbesondere als ein Notebook oder als ein Tablet-Computer, ausgebildet sein. In einer möglichen weiteren Ausführungsform ist die Ausleseeinheit als ein stationäres Gateway ausgebildet.

Die erfindungsgemäße Vorrichtung ist beispielsweise zur Ermittlung eines Füllstands von Wasser in einem Behälter, beispielsweise in einer Zisterne oder in einem Wasserfass oder in einem Regenwassertank, oder beispielsweise zur Ermittlung eines Füllstands von Öl in einem Öltank, oder zur Ermittlung eines Füllstands einer anderen Flüssigkeit in einem anderen Behälter vorgesehen. Beispielsweise kann die Vorrichtung auch zur Ermittlung eines Füllstands von Flüssiggas in einem Druckgasbehälter vorgesehen sein. Die Taucheinheit ist insbesondere derart ausgebildet, dass sie in die Flüssigkeit eintaucht und in der Flüssigkeit bis zu einem Boden des Behälters absinkt. Aus dem mittels der Druck-sensoreinheit der Tauchsensoreinheit ermittelten Druck im Bereich des Bodens des Behälters kann somit der Füllstand der Flüssigkeit im Behälter ermittelt werden.

Die Taucheinheit ist insbesondere derart ausgebildet, dass eine mittlere Dichte der Taucheinheit größer ist, insbesondere viel größer ist, beispielsweise um ein Vielfaches größer ist, insbesondere mindestens um ein Zweifaches größer ist, als eine Dichte der Flüssigkeit, für deren Füllstandermittlung die Vorrichtung vorgesehen ist. Dies gilt insbesondere unabhängig von einer Temperatur der Flüssigkeit und der Taucheinheit, d. h. für jede Temperatur, deren Auftreten während der Druckermittlung zur Ermittlung des Füllstands möglich ist.

Durch die Sendeeinheiten der Taucheinheit und der Schwimmeinheit wird insbesondere ein drahtloses Auslesen der ermittelten Druckwerte ermöglicht, so dass keine Leitung durch die Flüssigkeit hindurch zur Taucheinheit und auch keine Leitung zur Schwimmeinheit verlegt werden muss und die Taucheinheit und die Schwimmeinheit nicht zum Auslesen der ermittelten Druckwerte aus dem Behälter entfernt werden müssen.

Die Schwimmeinheit stellt insbesondere eine möglichst genaue Füllstandsermittlung sicher, da hierdurch zusätzlich zu den mittels der Taucheinheit ermittelten Druckwerten weitere Druckwerte im Bereich der Oberfläche der Flüssigkeit im Behälter ermittelbar sind. Alternativ zur Schwimmeinheit könnte dies beispielsweise mit einem Drucksensor in der Ausleseeinheit, beispielsweise in einem Mobiltelefon, insbesondere Smartphone, oder in einem tragbaren Computer, beispielsweise Tablet oder Notebook, erfolgen. Bei der erfindungsgemäßen Lösung umfasst die Vorrichtung hierfür jedoch die Schwimmeinheit mit der weiteren Drucksensoreinheit und der weiteren Sendeeinheit. Die weitere Drucksensoreinheit und die weitere Sendeeinheit sind insbesondere jeweils an oder im Schwimmkörper der Schwimmeinheit angeordnet.

Die Schwimmeinheit ist insbesondere derart ausgebildet, dass sie an der Oberfläche der Flüssigkeit im Behälter schwimmt. Die Schwimmeinheit ist insbesondere derart ausgebildet, dass eine mittlere Dichte der Schwimmeinheit kleiner ist, insbesondere viel kleiner ist, beispielsweise um ein Vielfaches kleiner ist, als die Dichte der Flüssigkeit, für deren Füllstandsermittlung die Vorrichtung vorgesehen ist. Dies gilt insbesondere unabhängig von einer Temperatur der Flüssigkeit und der Schwimmeinheit, d. h. für jede Temperatur, deren Auftreten während der Druckermittlung zur Ermittlung des Füllstands möglich ist.

Die nicht erfindungsgemäß als Funksendeeinheit ausgebildete Sendeeinheit der Taucheinheit und/oder die als Funksendeeinheit ausgebildete weitere Sendeeinheit der Schwimmeinheit ist vorteilhafterweise eine Bluetooth Low Energy Funkeinheit, d. h. entsprechend ausgebildet und eingerichtet, um eine Übertragung der ermittelten Druckwerte bzw. der ermittelten weiteren Druckwerte bzw. der ermittelten Füllstandshöhe mittels Bluetooth Low Energy (BLE) zu ermöglichen. Vorteilhafterweise sind sowohl die nicht erfindungsgemäß als Funksendeeinheit ausgebildete Sendeeinheit der Taucheinheit als auch die als Funksendeeinheit ausgebildete weitere Sendeeinheit der Schwimmeinheit entsprechend ausgebildet. Dadurch wird einerseits eine ausreichende Funkreichweite sichergestellt, um insbesondere auch die Taucheinheit, auch durch die Flüssigkeit hindurch und auch bei größeren Tiefen der in die Flüssigkeit eingetauchten Taucheinheit, sicher auslesen zu können, und andererseits wird ein geringer Energieverbrauch für die Funkübertragung sichergestellt.

In einer anderen Ausführungsform können/kann für die nicht erfindungsgemäß als Funksendeeinheit ausgebildete Sendeeinheit der Taucheinheit und/oder für die als Funksendeeinheit ausgebildete weitere Sendeeinheit der Schwimmeinheit als Funktechnologie beispielsweise Bluetooth, Beacon, Zigbee, LoRa, auch als LoRaWAN (Long Range Wide Area Network) bezeichnet, oder eine andere, auch proprietäre, Funktechnologie vorgesehen sein. Vorteilhafterweise ist eine Low-Power-Funktechnologie vorgesehen, somit eine Funktechnologie mit geringem Energieverbrauch.

Zum Betrieb der jeweiligen Drucksensoreinheit und Sendeeinheit, insbesondere zum Ermitteln und Übertragen der jeweiligen Druckwerte bzw. der ermittelten Füllstandshöhe, umfassen die Taucheinheit und die Schwimmeinheit vorteilhafterweise jeweils eine elektrische Energiequelle, insbesondere mindestens eine Batterie und/oder mindestens einen Akkumulator, d. h. eine wiederaufladbare Batterie.

Wie bereits erwähnt, ist die weitere Drucksensoreinheit am oder im Schwimmkörper der Schwimmeinheit derart angeordnet, dass sie bei in der Flüssigkeit, für deren Füllstandsermittlung die Vorrichtung vorgesehen ist, angeordneter Schwimmeinheit unter der Oberfläche der Flüssigkeit angeordnet ist. Beispielsweise ist sie an einer Unterseite oder im Bereich einer Unterseite des Schwimmkörpers angeordnet. Dadurch wird erreicht, dass sowohl die Drucksensoreinheit in der Taucheinheit als auch die weitere Drucksensoreinheit in der Schwimmeinheit ständig, zumindest weitestgehend, den gleichen Bedingungen ausgesetzt sind. Die Bedingungen, welchen die Drucksensoreinheiten ausgesetzt sind, beeinflussen insbesondere eine Alterung und eine Sensordrift der Drucksensoreinheiten. Da diese Drucksensoreinheiten bei dieser Ausführungsform der Vorrichtung den, zumindest weitestgehend, gleichen Bedingungen ausgesetzt sind, weisen sie entsprechend eine, zumindest weitestgehend, gleiche Alterung und Sensordrift auf, so dass Fehler bezüglich der Füllstandsermittlung aufgrund unterschiedlicher Alterung und Sensordrift der beiden Drucksensoreinheiten vermieden werden. Zudem wird durch das Eintauchen der weiteren Drucksensoreinheit der Schwimmeinheit in die Flüssigkeit sichergestellt, dass die Druckermittlung beider Drucksensoreinheiten bei gleicher Temperatur oder zumindest weitestgehend gleicher Temperatur erfolgt, so dass auch ein Temperatureinfluss auf die Füllstandsermittlung vermieden wird.

Die Drucksensoreinheiten der Schwimmeinheit und der Taucheinheit sind vorteilhafterweise gleich, insbesondere identisch, ausgebildet. Sie weisen vorteilhafterweise insbesondere eine gleiche Sensorkennlinie und eine gleiche Sensordrift auf.

Vorteilhafterweise sind auch der Schwimmkörper der Schwimmeinheit und der Tauchkörper der Taucheinheit gleich, insbesondere identisch. Dadurch wird eine Herstellung vereinfacht und ist kostengünstiger. Der Unterschied in der mittleren Dichte zwischen Schwimmeinheit und Taucheinheit wird beispielsweise dadurch erreicht, dass die Schwimmeinheit, insbesondere deren Schwimmkörper, beispielsweise stärker mit einem Gas oder Gasgemisch, insbesondere mit Luft, gefüllt ist, als die Taucheinheit, insbesondere deren Tauchkörper, und die Taucheinheit, insbesondere deren Tauchkörper, stärker mit einem Medium gefüllt ist, dessen Dichte größer ist, insbesondere viel größer ist, beispielsweise um ein Vielfaches größer ist, insbesondere mindestens um ein Zweifaches größer ist, als die Dichte der Flüssigkeit, für deren Füllstandsermittlung die Vorrichtung vorgesehen ist, insbesondere unabhängig von einer Temperatur der Flüssigkeit und der Taucheinheit, d. h. dies gilt insbesondere für jede Temperatur, deren Auftreten während der Druckermittlung zur Ermittlung des Füllstands möglich ist. Dieses Medium zum Befüllen der Taucheinheit, insbesondere von deren Tauchkörper, ist beispielsweise eine Vergussmasse, insbesondere ein Epoxidharz. Mittels dieser Vergussmasse können insbesondere alle im Tauchkörper angeordneten Komponenten im Tauchkörper sicher verankert werden, insbesondere die Sendeeinheit und die Drucksensoreinheit, indem sie mit der Vergussmasse teilweise oder vollständig umgossen, d. h. darin eingegossen, sind. Dieses Vergießen kann auch bei den im Schwimmkörper angeordneten Komponenten erfolgen, jedoch wird hierfür weniger Vergussmasse verwendet, um die ausreichend geringe mittlere Dichte der Schwimmeinheit, wie oben beschrieben, sicherzustellen. Dadurch bleibt zudem ein ausreichender Freiraum für das Gas oder Gasgemisch, insbesondere die Luft, um diese ausreichend geringe mittlere Dichte der Schwimmeinheit sicherzustellen. Bei der Taucheinheit wird entsprechend mehr Vergussmasse eingefüllt und dadurch mehr Luft aus der Taucheinheit verdrängt, wodurch die ausreichend hohe mittlere Dichte der Taucheinheit, wie oben beschrieben, sichergestellt wird.

In einer möglichen Ausführungsform der Vorrichtung sind/ist die Drucksensoreinheit und/oder die weitere Drucksensoreinheit als ein MEMS-Sensor ausgebildet. Vorteilhafterweise sind beide Drucksensoreinheiten jeweils als ein MEMS-Sensor ausgebildet, d. h. als ein Mikrosystem (MEMS = microelectromechanical system). Dadurch wird eine besonders kleine Bauweise der Taucheinheit bzw. der Schwimmeinheit ermöglicht. In anderen Ausführungsformen der Vorrichtung kann beispielsweise vorgesehen sein, dass die Drucksensoreinheit und/oder die weitere Drucksensoreinheit als eine piezoresistive Drucksensoreinheit ausgebildet ist, insbesondere dass ein Drucksensor der Drucksensoreinheit und/oder ein Drucksensor der weiteren Drucksensoreinheit als ein piezoresistiver Drucksensor ausgebildet ist.

In einer möglichen Ausführungsform sind/ist die Taucheinheit und/oder die Schwimmeinheit zumindest bereichsweise aus einem magnetisierbaren Material ausgebildet, insbesondere aus einem magnetisierbaren Metall. Dadurch wird auf einfache Weise beispielsweise ein Entnehmen aus dem Behälter ermöglicht, zum Beispiel mittels eines Magneten an einer Angel oder einem ähnlichen Werkzeug. Dies ist insbesondere für die Taucheinheit besonders vorteilhaft, da auf diese Weise kein manuelles Eintauchen in die Flüssigkeit und bis zum Boden des Behälters erforderlich ist, um die Taucheinheit zu erreichen und zu entnehmen.

Die Schwimmeinheit, insbesondere deren Schwimmkörper, ist, wie oben bereits erwähnt, beispielsweise zumindest teilweise mit einem Gas oder Gasgemisch, insbesondere mit Luft, gefüllt. Dadurch wird auf einfache Weise das Schwimmen der Schwimmeinheit an der Oberfläche der Flüssigkeit sichergestellt.

In einer möglichen Ausführungsform weisen/weist die Taucheinheit und/oder die Schwimmeinheit eine Uhr, insbesondere eine Niedrigenergieuhr, auch als Low-Power-Clock bezeichnet, insbesondere eine Echtzeituhr, auf. Vorteilhafterweise weisen/weist die Taucheinheit und/oder die Schwimmeinheit eine Speichereinheit, insbesondere zur Speicherung von ermittelten Druckwerten, insbesondere zusammen mit einem jeweiligen Ermittlungszeitpunkt, auf. Bei der Schwimmeinheit kann die Speichereinheit alternativ oder zusätzlich auch zur Speicherung ermittelter Füllstandshöhen, insbesondere zusammen mit einem jeweiligen Ermittlungszeitpunkt, vorgesehen sein. Vorteilhafterweise weisen sowohl die Taucheinheit als auch die Schwimmeinheit jeweils eine solche Uhr und vorteilhafterweise eine solche Speichereinheit auf. Dadurch können beispielsweise Druckwerte ermittelt und gespeichert und erst zu einem späteren Zeitpunkt ausgelesen werden, wobei durch die Speicherung der ermittelten Druckwerte zusammen mit den jeweiligen Ermittlungszeitpunkt die Zuordnung der ermittelten Druckwerte der Taucheinheit und der Schwimmeinheit zueinander sichergestellt werden kann und zudem nachvollzogen werden kann, zu welchem Zeitpunkt welcher Füllstand der Flüssigkeit im Behälter vorlag. Es kann beispielsweise auch vorgesehen sein, dass nur die Taucheinheit eine Echtzeituhr aufweist und/oder nur die Schwimmeinheit eine Speichereinheit aufweist. Zweckmäßigerweise umfasst die Vorrichtung, wie oben bereits erwähnt, die Ausleseeinheit zum Auslesen der mittels der Drucksensoreinheit der Taucheinheit und/oder mittels der weiteren Drucksensoreinheit der Schwimmeinheit ermittelten Druckwerte, vorteilhafterweise sowohl zum Auslesen der mittels der Drucksensoreinheit der Taucheinheit als auch der mittels der weiteren Drucksensoreinheit der Schwimmeinheit ermittelten Druckwerte, und/oder zum Auslesen der ermittelten Füllstandshöhe aus der Schwimmeinheit. Diese Ausleseeinheit weist hierzu zweckmäßigerweise eine zu der nicht erfindungsgemäß als Funksendeeinheit ausgebildeten Sendeeinheit der Taucheinheit und/oder zur als Funksendeeinheit ausgebildeten weiteren Sendeeinheit der Schwimmeinheit korrespondierende Funkeinheit, insbesondere Funkempfangseinheit, auf, insbesondere eine Bluetooth Low Energy Funkempfangseinheit, d. h. eine entsprechend ausgebildete und eingerichtete Funkempfangseinheit, um einen Empfang der ermittelten Druckwerte bzw. der ermittelten weiteren Druckwerte mittels Bluetooth Low Energy (BLE) zu ermöglichen, oder eine Funkempfangseinheit mit einer der oben zu den Sendeeinheiten genannten anderen Funktechnologien. Beispielsweise ist diese Ausleseeinheit als ein Mobiltelefon, insbesondere Smartphone, oder als ein tragbarer Computer ausgebildet, zum Beispiel als ein Tablet oder Notebook. In einer möglichen weiteren Ausführungsform ist die Ausleseeinheit als ein stationäres Gateway ausgebildet.

Die jeweilige oben erwähnte Sendeeinheit kann insbesondere gleichzeitig auch als Empfangseinheit ausgebildet sein, d. h. die Funksendeeinheit gleichzeitig auch als Funkempfangseinheit, die Ultraschallsendeeinheit gleichzeitig auch als Ultraschallempfangseinheit und die Lichtsignalsendeeinheit gleichzeitig auch als Lichtsignalempfangseinheit. Ebenso kann die jeweilige oben erwähnte Empfangseinheit, insbesondere die Funkempfangseinheit der Ausleseeinheit und/oder die Ultraschallempfangseinheit bzw. die Lichtsignalempfangseinheit der Schwimmeinheit, gleichzeitig auch als entsprechende Sendeeinheit ausgebildet sein. Dadurch wird eine bidirektionale Kommunikation zwischen der Ausleseeinheit und der Schwimmeinheit, zwischen der Ausleseeinheit und der Taucheinheit und/oder zwischen der Schwimmeinheit und der Taucheinheit ermöglicht. Insbesondere wird es dadurch beispielsweise ermöglicht, dass eine Übertragung von der Schwimmeinheit und/oder der Taucheinheit an die Ausleseeinheit erst als Reaktion auf eine entsprechende Aufforderung der Ausleseeinheit an die Schwimmeinheit bzw. an die Taucheinheit erfolgt und/oder dass eine Übertragung von der Taucheinheit an die Schwimmeinheit erst als Reaktion auf eine entsprechende Aufforderung der Schwimmeinheit an die Taucheinheit erfolgt.

Vorteilhafterweise weisen die Schwimmeinheit und die Taucheinheit jeweils auch einen Temperatursensor auf. Beispielsweise ist die jeweilige Drucksensoreinheit als eine kombinierte Druck- und Temperatursensoreinheit ausgebildet, d. h. sie umfasst einen Drucksensor und einen Temperatursensor. Auf diese Weise werden von der Taucheinheit beispielsweise nicht nur ermittelte Druckwerte, sondern auch zugehörige ermittelte Druckwerte an die Ausleseeinheit und/oder an die Schwimmeinheit übermittelt. Zusätzlich wird beispielsweise eine eindeutige Identifikation der Taucheinheit von der Taucheinheit an die Ausleseeinheit und/oder an die Schwimmeinheit übermittelt. Ebenso werden entsprechend von der Schwimmeinheit beispielsweise nicht nur ermittelte Druckwerte der Schwimmeinheit, sondern auch zugehörige ermittelte Druckwerte der Schwimmeinheit an die Ausleseeinheit. Zusätzlich wird beispielsweise eine eindeutige Identifikation der Schwimmeinheit von der Schwimmeinheit an die Ausleseeinheit übermittelt. Wenn die Druckwerte, Temperaturwerte und die eindeutige Identifikation der Taucheinheit von der Taucheinheit an die Schwimmeinheit übermittelt wurden, so werden auch diese Größen entsprechend von der Schwimmeinheit an die Ausleseeinheit übermittelt. Auf diese Weise kann auch die Temperatur bei der Ermittlung der Füllstandshöhe berücksichtigt werden, entweder in der Ausleseeinheit oder in der Schwimmeinheit. Wird die Füllstandshöhe in der Schwimmeinheit ermittelt, so wird beispielsweise nur die ermittelte Füllstandshöhe an die Ausleseeinheit übermittelt, beispielsweise zusammen mit der eindeutigen Identifikation der Schwimmeinheit und/oder der Taucheinheit.

Ausführungsbeispiele der Erfindung werden im Folgenden anhand von Zeichnungen näher erläutert.

Darin zeigen:

Figur 1    schematisch eine Ausführungsform einer Vorrichtung zur Ermittlung eines Füllstands einer Flüssigkeit in einem Behälter mit einer Taucheinheit und einer Schwimmeinheit,

Figur 2    schematisch eine alternative Ausführungsform der Schwimmeinheit,

Figur 3    schematisch eine Berechnung des Füllstands,

Figur 4    schematisch einen Nullpunktabgleich von Schwimmeinheit und Taucheinheit,

Figur 5    schematisch in einer nicht erfindungsgemäßen Ausführungsform eine Variante der Vorrichtung mit als Funksendeeinheiten ausgebildeten Sendeeinheiten in der Taucheinheit und in der Schwimmeinheit,

Figur 6    schematisch eine weitere Variante der Vorrichtung mit einer als Ultraschallsendeeinheit oder Lichtsignalsendeeinheit ausgebildeten Sendeeinheit in der Taucheinheit,

Figur 7    schematisch einen Schaltplan der Taucheinheit der Variante der Vorrichtung gemäß Figur 6, und

Figur 8    schematisch einen Schaltplan der Schwimmeinheit der Variante der Vorrichtung gemäß Figur 6.

Einander entsprechende Teile sind in allen Figuren mit den gleichen Bezugszeichen versehen.

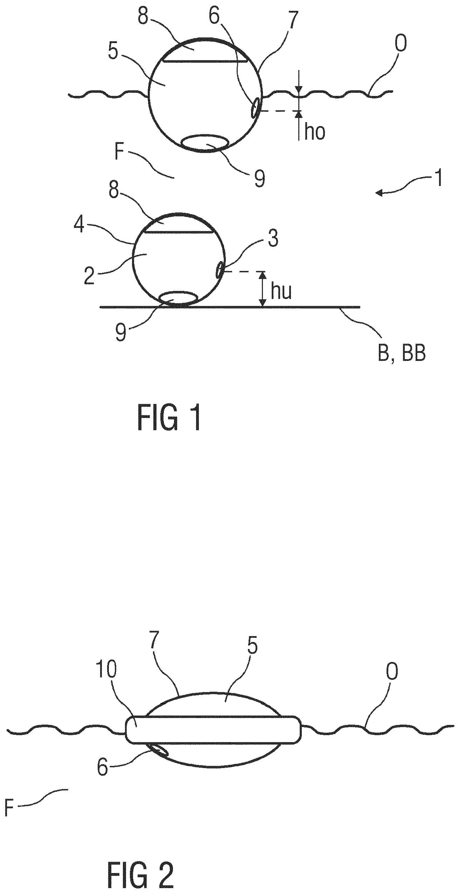

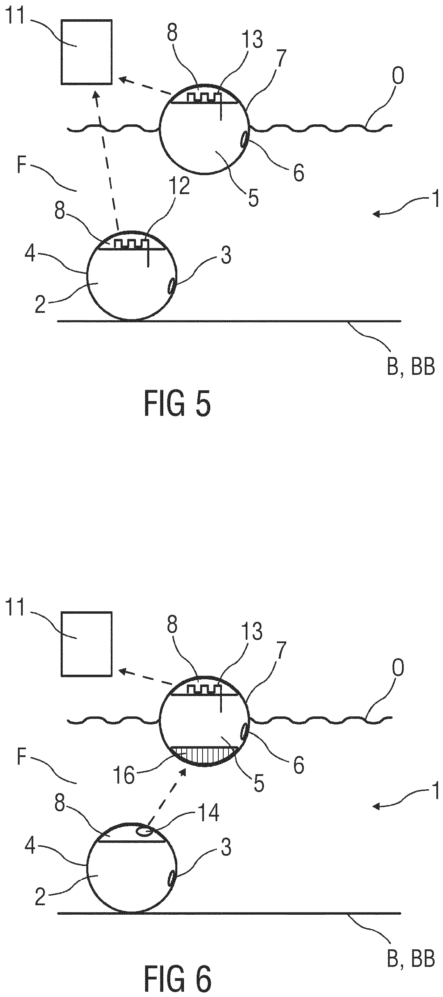

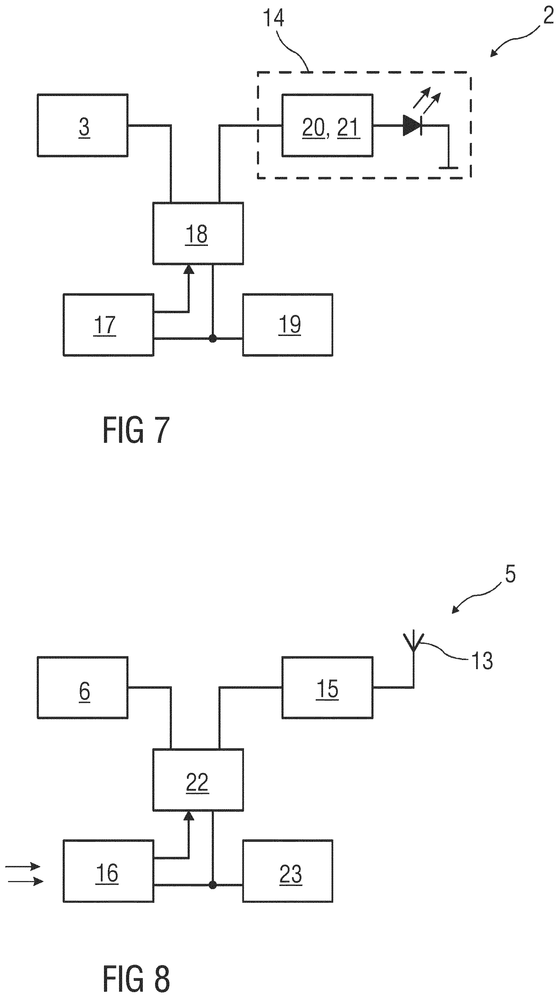

**Figur 1** zeigt eine schematische Darstellung einer beispielhaften Ausführungsform einer Vorrichtung 1 zur Ermittlung eines Füllstands einer Flüssigkeit F in einem Behälter B. Die Vorrichtung 1 umfasst eine Taucheinheit 2 mit einer Drucksensoreinheit 3 und einer als Funksendeeinheit, als Ultraschallsendeeinheit oder als Lichtsignalsendeeinheit ausgebildeten Sendeeinheit 14, insbesondere zur Übertragung von mittels der Drucksensoreinheit 3 ermittelten Druckwerten. Die Drucksensoreinheit 3 und die Sendeeinheit 14 sind in einem Tauchkörper 4 der Taucheinheit 2 angeordnet. Die Sendeeinheit 14 ist beispielhaft schematisch in den Figuren 6 und 7 dargestellt.

Zudem umfasst die Vorrichtung 1 in der hier dargestellten Ausführungsform eine Schwimmeinheit 5 mit einer weiteren Drucksensoreinheit 6 und einer als Funksendeeinheit ausgebildeten weiteren Sendeeinheit 15. Diese weitere Sendeeinheit 15 kann zur Übertragung von mittels der weiteren Drucksensoreinheit 6 ermittelten Druckwerten und beispielsweise zusätzlich zur Übertragung von mittels der Drucksensoreinheit 3 der Taucheinheit 2 ermittelten und an die Schwimmeinheit 5 übertragenen Druckwerten vorgesehen sein. Alternativ oder zusätzlich kann diese weitere Sendeeinheit 15 beispielsweise zur Übertragung einer aus einem mittels der Drucksensoreinheit 3 der Taucheinheit 2 ermittelten und an die Schwimmeinheit 5 übertragenen Druckwert und einem mittels der weiteren Drucksensoreinheit 6 der Schwimmeinheit 5 in der Schwimmeinheit 5 ermittelten Füllstandshöhe h vorgesehen sein. Die weitere Drucksensoreinheit 6 und die weitere Sendeeinheit 15 sind insbesondere jeweils an oder in einem Schwimmkörper 7 der Schwimmeinheit 5 angeordnet. Die weitere Sendeeinheit 15 ist beispielhaft schematisch in Figur 8 dargestellt.

Die Vorrichtung 1 ist beispielsweise zur Ermittlung eines Füllstands von Wasser in einer Zisterne oder in einem Wasserfass, oder beispielsweise zur Ermittlung eines Füllstands von Öl in einem Öltank, oder zur Ermittlung eines Füllstands einer anderen Flüssigkeit F in einem anderen Behälter B vorgesehen. Die Taucheinheit 2 ist insbesondere derart ausgebildet, dass sie in die Flüssigkeit F eintaucht und in der Flüssigkeit F bis zu einem Boden BB des Behälters B absinkt, wie in Figur 1 gezeigt.

Die Taucheinheit 2 ist insbesondere derart ausgebildet, dass eine mittlere Dichte der Taucheinheit 2 größer ist, insbesondere viel größer ist, beispielsweise um ein Vielfaches größer ist, als eine Dichte der Flüssigkeit F, für deren Füllstandsermittlung die Vorrichtung 1 vorgesehen ist. Dies gilt insbesondere unabhängig von einer Temperatur der Flüssigkeit F und der Taucheinheit 2, d. h. für jede Temperatur, deren Auftreten während der Druckermittlung zur Ermittlung des Füllstands möglich ist.

Die Schwimmeinheit 5 ist insbesondere derart ausgebildet, dass sie an der Oberfläche O der Flüssigkeit F im Behälter B schwimmt, wie ebenfalls in Figur 1 gezeigt. Die Schwimmeinheit 5 ist insbesondere derart ausgebildet, dass eine mittlere Dichte der Schwimmeinheit 5 kleiner ist, insbesondere viel kleiner ist, beispielsweise um ein Vielfaches kleiner ist, als die Dichte der Flüssigkeit F, für deren Füllstandsermittlung die Vorrichtung 1 vorgesehen ist. Dies gilt insbesondere unabhängig von einer Temperatur der Flüssigkeit F und der Schwimmeinheit 5, d. h. für jede Temperatur, deren Auftreten während der Druckermittlung zur Ermittlung des Füllstands möglich ist.

Die als Funksendeeinheit ausgebildete weitere Sendeeinheit 15 der Schwimmeinheit 5 ist eine Bluetooth Low Energy-Funksendeeinheit, d. h. entsprechend ausgebildet und eingerichtet, um eine Übertragung der mittels der Drucksensoreinheit der Schwimmeinheit 5 ermittelten Druckwerte und beispielsweise auch der mittels der Drucksensoreinheit 3 der Taucheinheit 2 ermittelten und an die Schwimmeinheit 5 übertragenen Druckwerte und/oder eine Übertragung der ermittelten Füllstandshöhe h mittels Bluetooth Low Energy (BLE) zu ermöglichen. Ist die Sendeeinheit 14 der Taucheinheit 2 als Funksendeeinheit ausgebildet, dann ist auch diese Funksendeeinheit eine Bluetooth Low Energy-Funksendeeinheit, d. h. entsprechend ausgebildet und eingerichtet, um eine Übertragung der mittels der Drucksensoreinheit 3 der Taucheinheit 2 ermittelten Druckwerte mittels Bluetooth Low Energy (BLE) zu ermöglichen.

Zum Betrieb der jeweiligen Drucksensoreinheit 3, 6 und Sendeeinheit 14, 15, insbesondere zum Ermitteln und Übertragen der jeweiligen Druckwerte, umfassen die Taucheinheit 2 und die Schwimmeinheit 5 vorteilhafterweise jeweils eine elektrische Energiequelle, insbesondere mindestens eine Batterie 19, 23 und/oder mindestens einen Akkumulator, d. h. eine wiederaufladbare Batterie 19, 23.

In der in Figur 1 gezeigten Ausführungsform weisen sowohl die Taucheinheit 2 als auch die Schwimmeinheit 5 eine Kugelform auf. Es sind jedoch auch andere Formen möglich, beispielsweise eine Stabform oder eine Ellipsoidform. Beispielsweise ist die Schwimmeinheit 5, insbesondere deren Schwimmkörper 7, zumindest teilweise mit einem Gas oder Gasgemisch, insbesondere Luft, gefüllt, hier dargestellt durch eine Gasblase 8, insbesondere Luftblase, in einem oberen Bereich der Schwimmeinheit 5. Ein unterer Bereich der Schwimmeinheit 5 ist beispielsweise aus einem Material 9 mit hoher Dichte, insbesondere mit einer Dichte größer, insbesondere viel größer, insbesondere um ein Vielfaches, beispielsweise mindestens Zweifaches, größer als die Dichte der Flüssigkeit F, für deren Füllstandsermittlung die Vorrichtung 1 vorgesehen ist, ausgebildet und/oder mit einem solchen Material 9 gefüllt. Dadurch wird eine stabile schwimmende Ausrichtung der Schwimmeinheit 5 an der Oberfläche O der Flüssigkeit F erreicht. Insbesondere wird ein Drehen der Schwimmeinheit 5 um ihre vertikale Rotationachse und somit eine Höhenänderung der weiteren Drucksensoreinheit 6 vermieden.

Zudem wird dadurch erreicht, dass die weitere Drucksensoreinheit 6 unter der Oberfläche O der Flüssigkeit F angeordnet ist. D. h. die Schwimmeinheit 5 ist derart ausgebildet und die weitere Drucksensoreinheit 6 am oder im Schwimmkörper 7 der Schwimmeinheit 5 derart angeordnet, dass diese weitere Drucksensoreinheit 6 bei in der Flüssigkeit F, für deren Füllstandsermittlung die Vorrichtung 1 vorgesehen ist, angeordneter Schwimmeinheit 5 unter der Oberfläche O der Flüssigkeit F angeordnet ist, wie in Figur 1 gezeigt.

Das Material 9 kann beispielsweise die mindestens eine (beispielsweise wiederaufladbare) weitere Batterie 23 sein, welche/welcher zu diesem Zweck gezielt in diesem unteren Bereich der Schwimmeinheit 5 positioniert ist, insbesondere um dadurch einen Schwerpunkt der Schwimmeinheit 5 entsprechend abzusenken.

Die Taucheinheit 2 ist im dargestellten Beispiel ebenfalls teilweise mit einem Gas oder Gasgemisch, insbesondere Luft, gefüllt, hier dargestellt ebenfalls durch eine Gasblase 8 in einem oberen Bereich der Taucheinheit 2. Auch bei der Taucheinheit 2 ist ein unterer Bereich beispielsweise aus einem Material mit hoher Dichte, insbesondere mit einer Dichte größer, insbesondere viel größer, insbesondere um ein Vielfaches, beispielsweise mindestens Zweifaches, größer als die Dichte der Flüssigkeit F, für deren Füllstandsermittlung die Vorrichtung 1 vorgesehen ist ausgebildet und/oder mit einem solchen Material 9 gefüllt. Dadurch wird eine stabile Ausrichtung der Taucheinheit 2 und somit von deren Drucksensoreinheit 3 erreicht. Insbesondere wird dadurch ein Drehen der Taucheinheit 2 um ihre vertikale Rotationachse und somit eine Höhenänderung der Drucksensoreinheit 3 vermieden.

Auch hier kann das Material 9 beispielsweise die mindestens eine (beispielsweise wiederaufladbare) Batterie 19 und/oder der mindestens eine Akkumulator sein, welche/welcher zu diesem Zweck gezielt in diesem unteren Bereich der Taucheinheit 2 positioniert ist, insbesondere um dadurch einen Schwerpunkt der Schwimmeinheit 5 entsprechend abzusenken.

Bei der in Figur 1 dargestellten Ausführungsform sind vorteilhafterweise der Schwimmkörper 7 der Schwimmeinheit 5 und der Tauchkörper 4 der Taucheinheit 2 gleich, insbesondere identisch. Dadurch wird eine Herstellung vereinfacht und ist kostengünstiger. Der Unterschied in der mittleren Dichte zwischen Schwimmeinheit 5 und Taucheinheit 2 wird beispielsweise dadurch erreicht, dass die Schwimmeinheit 5, insbesondere deren Schwimmkörper 7, beispielsweise stärker mit dem Gas oder Gasgemisch, insbesondere mit Luft, gefüllt ist, als die Taucheinheit 2, insbesondere deren Tauchkörper 4, und die Taucheinheit 2, insbesondere deren Tauchkörper 4, stärker mit einem Medium gefüllt ist, dessen Dichte größer ist, insbesondere viel größer ist, beispielsweise um ein Vielfaches größer ist, insbesondere mindestens um ein Zweifaches größer ist, als die Dichte der Flüssigkeit F, für deren Füllstandsermittlung die Vorrichtung 1 vorgesehen ist, insbesondere unabhängig von einer Temperatur der Flüssigkeit F und der Taucheinheit 2, d. h. dies gilt insbesondere für jede Temperatur, deren Auftreten während der Druckermittlung zur Ermittlung des Füllstands möglich ist.

Dieses Medium zum Befüllen der Taucheinheit 2, insbesondere von deren Tauchkörper 4, ist beispielsweise eine Vergussmasse, insbesondere ein Epoxidharz. Mittels dieser Vergussmasse können insbesondere alle im Tauchkörper 4 angeordneten Komponenten im Tauchkörper 4 sicher verankert werden, insbesondere die Sendeeinheit 14 und die Drucksensoreinheit 3, indem sie mit der Vergussmasse teilweise oder vollständig umgossen, d. h. darin eingegossen, sind.

Dieses Vergießen kann auch bei den im Schwimmkörper 7 der Schwimmeinheit 5 angeordneten Komponenten erfolgen, jedoch wird hierfür weniger Vergussmasse verwendet, um die ausreichend geringe mittlere Dichte der Schwimmeinheit 5, wie oben beschrieben, sicherzustellen. Dadurch bleibt zudem ein ausreichender Freiraum für das Gas oder Gasgemisch, insbesondere die Luft, um diese ausreichend geringe mittlere Dichte der Schwimmeinheit 5 sicherzustellen. Bei der Taucheinheit 2 wird entsprechend mehr Vergussmasse in deren Tauchkörper 4 eingefüllt und dadurch mehr Luft aus der Taucheinheit 2, d. h. aus deren Tauchkörper 4, verdrängt, wodurch die ausreichend hohe mittlere Dichte der Taucheinheit 2, wie oben beschrieben, sichergestellt wird.

Vorteilhafterweise ist die Taucheinheit 2, insbesondere deren Tauchkörper 4 zumindest bereichsweise aus einem magnetisierbaren Material, insbesondere aus einem magnetisierbaren Metall, ausgebildet. Dadurch wird eine einfache Entnahme der Taucheinheit 2 aus der Flüssigkeit F und aus dem Behälter B mittels eines Magneten ermöglicht, welcher hierzu beispielsweise an einer Angel oder einem anderen geeigneten Werkzeug angeordnet ist.

**Figur 2** zeigt eine andere Ausführungsform der Schwimmeinheit 5. Diese Ausführungsform der Schwimmeinheit 5 ist linsenförmig oder zylinderförmig ausgebildet. Abgesehen davon ist ihre Ausbildung vorteilhafterweise wie oben zur Schwimmeinheit 5 beschrieben. Sie weist vorteilhafterweise einen oberen leichten Bereich und einen unteren schweren Bereich auf, insbesondere durch die oben beschriebene Ausbildung, so dass sie stabil an der Oberfläche O der Flüssigkeit F schwimmt. Hierfür weist sie zudem einen Schwimmring 10 auf, um ihre Schwimmeigenschaften zu verbessern, d. h. eine ringförmig um den Schwimmkörper 7 verlaufende Struktur aus einem Material, dessen Dichte, insbesondere mittlere Dichte, kleiner ist, insbesondere viel kleiner ist, beispielsweise um ein Vielfaches kleiner ist, als die Dichte der Flüssigkeit F, für deren Füllstandsermittlung die Vorrichtung 1 vorgesehen ist. Dies gilt insbesondere unabhängig von einer Temperatur der Flüssigkeit F und des Schwimmrings 10, d. h. für jede Temperatur, deren Auftreten während der Druckermittlung zur Ermittlung des Füllstands möglich ist.

Auch diese Ausführungsform der Schwimmeinheit 5 ist derart ausgebildet und die weitere Drucksensoreinheit 6 ist am oder im Schwimmkörper 7 dieser Ausführungsform der Schwimmeinheit 5 derart angeordnet, dass diese weitere Drucksensoreinheit 6 bei in der Flüssigkeit F, für deren Füllstandsermittlung die Vorrichtung 1 vorgesehen ist, angeordneter Schwimmeinheit 5 unter der Oberfläche O der Flüssigkeit F angeordnet ist.

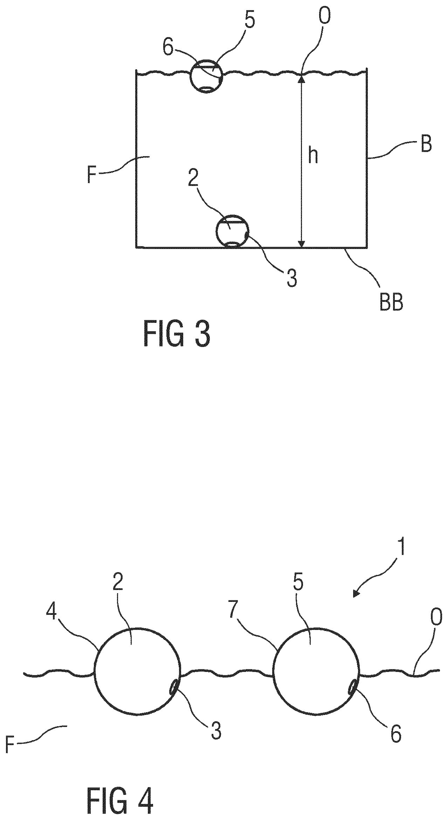

Anhand **Figur 3** werden im Folgenden kurz die Grundlagen der Füllstandsermittlung mittels der Vorrichtung 1 erläutert.

Für den Druck $p$ in der Flüssigkeit F am Boden BB des Behälters B gilt:

$$p = \rho * g * h + p_0 \hspace{3cm} (1)$$

Dabei ist $\rho$ die Dichte der Flüssigkeit F, welche für die jeweilige Flüssigkeit F, beispielsweise Wasser, bekannt ist und somit vorgegeben wird, beispielsweise für eine vorgegebene Temperatur, zum Beispiel für eine mittlere Temperatur aus einem für die jeweilige Messsituation möglichen Temperaturbereich, $g$ ist die Erdbeschleunigung von ca. 9,81 m/s$^2$, auch als Fallbeschleunigung oder Schwerebeschleunigung bezeichnet, $h$ ist die Füllstandshöhe und $p_0$ der Luftdruck.

Mittels der Drucksensoreinheit 3 der Taucheinheit 2 wird der Druck $p$ in der Flüssigkeit F am Boden BB des Behälters B oder zumindest im Bereich des Bodens BB des Behälters B ermittelt, wie im Folgenden noch erläutert wird. Mittels der weiteren Drucksensoreinheit 6 der Schwimmeinheit 5 wird der Luftdruck $p_0$ an der Oberfläche O der Flüssigkeit F oder zumindest der Druck unterhalb und im Bereich der Oberfläche O der Flüssigkeit F ermittelt, wie im Folgenden ebenfalls noch erläutert wird.

Wie aus Figur 1 ersichtlich, ist die Drucksensoreinheit 3 der Taucheinheit 2 nicht exakt am Boden BB des Behälters B positioniert, wenn die Taucheinheit 2 auf dem Boden BB des Behälters B aufliegt, sondern in einer Höhe hu oberhalb des Bodens BB, so dass mittels der Drucksensoreinheit 3 der Taucheinheit 2 nicht der Druck $p$ in der Flüssigkeit F am Boden BB des Behälters B ermittelt wird, sondern ein Druck $p_3$ in der Flüssigkeit F in der Höhe hu oberhalb des Bodens BB. Auch die weitere Drucksensoreinheit 6 der Schwimmeinheit 5 ist nicht exakt an der Oberfläche O der Flüssigkeit F positioniert, wenn die Schwimmeinheit 5 an der Oberfläche O der Flüssigkeit F schwimmt, sondern in einer Höhe ho unterhalb der Oberfläche O der Flüssigkeit F, so dass mittels der weiteren Drucksensoreinheit 6 der Schwimmeinheit 5 nicht der Luftdruck $p_0$ an der Oberfläche O der Flüssigkeit F ermittelt wird, sondern ein Druck $p_6$ unterhalb und im Bereich der Oberfläche O der Flüssigkeit F, nämlich in der Höhe ho unterhalb der Oberfläche O der Flüssigkeit F. Da jedoch die Höhe hu und die Höhe ho aufgrund der vorgegebenen Ausgestaltung der Taucheinheit 2 und der Schwimmeinheit 5 bekannt und konstant sind, können sie somit bei der Berechnung der Füllstandshöhe $h$ und somit des Füllstands der Flüssigkeit F im Behälter B herausgerechnet werden. Insbesondere können die Höhe hu und die Höhe ho zur berechneten Füllstandshöhe $h$ addiert werden.

Die Füllstandshöhe $h$ und somit der Füllstand der Flüssigkeit F im Behälter B kann somit durch Umstellen der Formel (1), Verwenden des Drucks $p_3$ an Stelle des Druck $p$, Verwenden des Drucks $p_6$ an Stelle des Luftdrucks $p_0$ und Addieren der Höhen hu und ho zur Füllstandshöhe h ermittelt werden:

$$h = \frac{p_3 - p_6}{\rho * g} + \mathrm{hu} + \mathrm{ho} \hspace{3cm} (2)$$

Die beiden Drucksensoreinheiten 3, 6 weisen Quersensitivitäten auf, welche insbesondere temperaturabhängig sind. Des Weiteren unterliegen die beiden Drucksensoreinheiten 3, 6, welche vorteilhafterweise gleich sind, insbesondere identisch sind, einer Alterung, wobei diese Alterung von den Bedingungen abhängig ist, denen die Drucksensoreinheiten 3, 6 ausgesetzt sind. Durch die Ausbildung der Schwimmeinheit 5 derart, dass die weitere Drucksensoreinheit 6 unter der Oberfläche O der Flüssigkeit F angeordnet ist, insbesondere durch die entsprechende Anordnung der weiteren Drucksensoreinheit 6 am Schwimmkörper 7 der Schwimmeinheit 5, wird erreicht, dass beide Drucksensoreinheiten 3, 6 unterhalb der Oberfläche O der Flüssigkeit F angeordnet sind, d. h. in der Flüssigkeit F angeordnet und somit von der Flüssigkeit F umgeben sind, und somit die Temperatur, in der Flüssigkeit F, für beide Drucksensoren 3, 6 gleich oder zumindest näherungsweise gleich ist und ebenfalls die Alterungsbedingungen für beide Drucksensoren 3, 6 gleich oder zumindest näherungsweise gleich sind. Dadurch sind beispielsweise Sensordriften der beiden Drucksensoren 3, 6 gleich oder zumindest näherungsweise gleich und heben sich vorteilhafterweise auf. Somit können Alterungs- und Temperatureffekte, welche die Füllstandsermittlung negativ beeinflussen könnten, insbesondere verfälschen könnten, vermieden werden oder zumindest im Wesentlichen vermieden werden.

Zusätzlich zur Taucheinheit 2 und Schwimmeinheit 5 umfasst die Vorrichtung 1 zweckmäßigerweise eine in den Figuren 5 und 6 beispielhaft schematisch dargestellte Ausleseeinheit 11 zum Auslesen der mittels der Drucksensoreinheit 3 der Taucheinheit 2 und der mittels der weiteren Drucksensoreinheit 6 der Schwimmeinheit 5 ermittelten Druckwerte, wobei Figur 5 schematisch in einer nicht erfindungsgemäßen Ausführungsform eine Variante der Vorrichtung 1 mit der nicht erfindungsgemäß als Funksendeeinheit ausgebildeten Sendeeinheit 14 der Taucheinheit 2 zeigt. Diese Ausleseeinheit 11 weist hierzu zweckmäßigerweise ebenfalls eine Bluetooth Low Energy-Funkeinheit auf, d. h. eine entsprechend ausgebildete und eingerichtete Empfangseinheit, insbesondere Funkempfangseinheit, um einen Empfang der mittels der Drucksensoreinheiten 3, 6 der Taucheinheit 2 und der Schwimmeinheit 5 ermittelten Druckwerte und/oder der ermittelten Füllstandshöhe h mittels Bluetooth Low Energy (BLE) zu ermöglichen. Beispielsweise ist diese Ausleseeinheit 11 als ein Mobiltelefon, insbesondere Smartphone, oder als ein tragbarer Computer ausgebildet, zum Beispiel als ein Tablet oder Notebook, oder sie ist beispielsweise als ein stationäres Gateway ausgebildet.

Eine Kalibrierung und Initialisierung der Taucheinheit 2, insbesondere deren Drucksensoreinheit 3, und der Schwimmeinheit 5, insbesondere deren weiterer Drucksensoreinheit 6, erfolgt vorteilhafterweise mittels eines Programms, zum Beispiel mittels einer App, auf der Ausleseeinheit 11, beispielsweise auf dem Mobiltelefon, insbesondere Smartphone. Hierfür wird beispielweise ein Nullpunktabgleich von Schwimmeinheit 5 und Taucheinheit 2, insbesondere von deren Drucksensoreinheiten 6, 3, durchgeführt, wie in **Figur 4** gezeigt. Für diesen Nullpunktabgleich werden sowohl die Schwimmeinheit 5 als auch die Taucheinheit 2 an der Oberfläche O der Flüssigkeit F, insbesondere auf gleicher Höhe, insbesondere bezüglich der Oberfläche O der Flüssigkeit F, festgehalten. Dabei wird vorteilhafterweise mit beiden Drucksensoreinheiten 3, 6 jeweils ein Druckwert ermittelt. Diese Druckwerte werden dann vorteilhafterweise im Programm, insbesondere in der App, als Nullpunkt erfasst. Alternativ oder zusätzlich können diese Druckwerte beispielsweise miteinander verglichen werden und/oder anhand dieser Druckwerte und/oder dieses Vergleichs die beiden Drucksensoreinheiten 3, 6, insbesondere bei Abweichungen zwischen den beiden ermittelten Druckwerten, beispielsweise kalibriert und/oder justiert werden.

Alternativ oder zusätzlich werden beispielsweise sowohl die Schwimmeinheit 5 als auch die Taucheinheit 2 untergetaucht, d. h. in die Flüssigkeit F auf eine vorgegebene gleiche Tauchtiefe, insbesondere bezüglich der Drucksensoren 6, 3, eingetaucht. Diese Tauchtiefe wird vorteilhafterweise in das Programm, insbesondere in die App, eingegeben.

In einer möglichen Ausführungsform weisen die Taucheinheit 2 und die Schwimmeinheit 5 jeweils eine Uhr, insbesondere eine Niedrigenergieuhr, auch als Low-Power-Clock bezeichnet, insbesondere eine Echtzeituhr, und vorteilhafterweise zudem eine Speichereinheit zur Speicherung von ermittelten Druckwerten zusammen mit einem jeweiligen Ermittlungszeitpunkt auf. Dadurch wird eine Datenloggerfunktion der Taucheinheit 2 und der Schwimmeinheit 5 ermöglicht, insbesondere ein automatisches Ermitteln des jeweiligen Druckwertes zu vorgegebenen Zeitpunkten, beispielsweise in einem vorgegebenen zeitlichen Abstand von zum Beispiel zehn Minuten, und Abspeichern des jeweils ermittelten Druckwerts zusammen mit dem Ermittlungszeitpunkt. Diese Gesamtdaten, d. h. Druckwerte und deren Ermittlungszeitpunkte, können dann zu einem späteren Zeitpunkt, insbesondere mittels der Ausleseeinheit 11 und/oder, bezüglich der Druckwerte und Ermittlungszeitpunkte der Taucheinheit 2, mittels der Schwimmeinheit 5, ausgelesen werden, wobei anhand dieser Gesamtdaten, d. h. der Druckwerte und deren Zeitkorrelation, beispielsweise ein Füllstandsverlauf ermittelt werden kann.

**Figur 5** zeigt in einer nicht erfindungsgemäßen Ausführungsform eine Variante der Vorrichtung 1, bei welcher sowohl die weitere Sendeeinheit 15 der Schwimmeinheit 5 als auch, nicht erfindungsgemäß, die Sendeeinheit 14 der Taucheinheit 2 als Funksendeeinheit ausgebildet sind. Dargestellt ist hier eine Antenne 12, 13 der jeweiligen als Funksendeeinheit ausgebildeten Sendeeinheit 14, 15. Diese Antenne 12, 13 ist vorteilhafterweise in einem mit dem Gas oder Gasgemisch, insbesondere Luft, gefüllten Hohlraum des Schwimmkörpers 7 bzw. des Tauchkörpers 4 angeordnet, im hier dargestellten Beispiel in der Gasblase 8.

Dargestellt ist hier zudem die Ausleseeinheit 11, beispielsweise das Smartphone, welches eine entsprechende Empfangseinheit, insbesondere Funkempfangseinheit, aufweist. Bei dieser Variante werden die von der weiteren Drucksensoreinheit 6 der Schwimmeinheit 5 ermittelten Druckwerte und vorteilhafterweise auch mittels eines Temperatursensors der Schwimmeinheit 5 ermittelte Temperaturwerte und vorteilhafterweise auch eine eindeutige Identifikation der Schwimmeinheit 5 mittels der als Funksendeeinheit ausgebildeten weiteren Sendeeinheit 15 der Schwimmeinheit 5 an die Ausleseeinheit 11 übertragen. Des Weiteren werden die von der Drucksensoreinheit 3 der Taucheinheit 2 ermittelten Druckwerte und vorteilhafterweise auch mittels eines Temperatursensors der Taucheinheit 2 ermittelte Temperaturwerte und vorteilhafterweise auch eine eindeutige Identifikation der Taucheinheit 2 mittels der nicht erfindungsgemäß als Funksendeeinheit ausgebildeten Sendeeinheit 14 der Taucheinheit 2 nicht erfindungsgemäß direkt an die Ausleseeinheit 11 übertragen. In der Ausleseeinheit 11 wird dann die Füllstandshöhe h aus diesen Druckwerten und vorteilhafterweise unter Berücksichtigung der Temperaturwerte ermittelt. Die Ausleseeinheit 11 weist hierfür eine entsprechende Ermittlungseinheit auf.

**Figur 6** zeigt eine weitere Variante der Vorrichtung 1, bei welcher die Sendeeinheit 14 der Taucheinheit 2 als Ultraschallsendeeinheit oder Lichtsignalsendeeinheit ausgebildet ist. Die Lichtsignalsendeeinheit umfasst beispielsweise mindestens eine LED (Licht emittierende Diode). Bei dieser Variante der Vorrichtung 1 weist die Schwimmeinheit 5 entsprechend eine als Ultraschallempfangseinheit oder als Lichtsignalempfangseinheit ausgebildete Empfangseinheit 16 auf. D. h. wenn die Sendeeinheit 14 der Taucheinheit 2 als Ultraschallsendeeinheit ausgebildet ist, dann ist die Empfangseinheit 16 der Schwimmeinheit 5 als Ultraschallempfangseinheit ausgebildet, und wenn die Sendeeinheit 14 der Taucheinheit 2 als Lichtsignalsendeeinheit ausgebildet ist, dann ist die Empfangseinheit 16 der Schwimmeinheit 5 als Lichtsignalempfangseinheit ausgebildet. Die Lichtsignalempfangseinheit ist beispielsweise als eine Photodiode ausgebildet oder umfasst eine solche Photodiode. Die Empfangseinheit 16 ist insbesondere als eine Low-Power-Empfangseinheit ausgebildet, d. h. insbesondere als eine Empfangseinheit 16 mit einem niedrigen Energieverbrauch. Die Empfangseinheit 16 realisiert insbesondere eine Wake-up-Funktion, d. h. eine Aufwach- und/oder Aktivierungsfunktion, für die restliche Schaltung der Schwimmeinheit 5.

Dargestellt ist hier zudem die Ausleseeinheit 11, beispielsweise das Smartphone, welches eine Empfangseinheit, insbesondere Funkempfangseinheit, aufweist. Bei dieser Variante werden die von der Drucksensoreinheit 3 der Taucheinheit 2 ermittelten Druckwerte und vorteilhafterweise auch mittels des Temperatursensors der Taucheinheit 2 ermittelte Temperaturwerte und vorteilhafterweise auch die eindeutige Identifikation der Taucheinheit 2 mittels der als Ultraschallsendeeinheit oder Lichtsignalsendeeinheit ausgebildeten Sendeeinheit 14 der Taucheinheit 2 an die Schwimmeinheit 5 übertragen.

Es kann dann beispielsweise vorgesehen sein, dass diese Druckwerte und vorteilhafterweise auch die Temperaturwerte und beispielsweise auch die eindeutige Identifikation der Taucheinheit 2 zusammen mit den von der weiteren Drucksensoreinheit 6 der Schwimmeinheit 5 ermittelten Druckwerten und vorteilhafterweise auch den mittels des Temperatursensors der Schwimmeinheit 5 ermittelten Temperaturwerten und vorteilhafterweise auch der eindeutigen Identifikation der Schwimmeinheit 5 mittels der als Funksendeeinheit ausgebildeten weiteren Sendeeinheit 15 der Schwimmeinheit 5 an die Ausleseeinheit 11 übertragen werden. In diesem Fall wird in der Ausleseeinheit 11 die Füllstandshöhe h aus diesen Druckwerten und vorteilhafterweise unter Berücksichtigung der Temperaturwerte ermittelt. Die Ausleseeinheit 11 weist hierfür die entsprechende Ermittlungseinheit auf.

Alternativ kann beispielsweise vorgesehen sein, dass in der Schwimmeinheit 5 die Füllstandshöhe h aus diesen Druckwerten und vorteilhafterweise unter Berücksichtigung der Temperaturwerte ermittelt wird. Die Schwimmeinheit 5 weist dann hierfür eine entsprechende Ermittlungseinheit auf. Beispielsweise wird dann nur die ermittelte Füllstandshöhe h, gegebenenfalls zusammen mit der eindeutigen Identifikation der Schwimmeinheit 5 und/oder der Taucheinheit 2, mittels der als Funksendeeinheit ausgebildeten weiteren Sendeeinheit 15 der Schwimmeinheit 5 an die Ausleseeinheit 11 übertragen. Beispielsweise können zusätzlich die ermittelten Druckwerte und/oder Temperaturwerte der Schwimmeinheit 5 und/oder der Taucheinheit 2 auf diese Weise an die Ausleseeinheit 11 übertragen werden.

Bei dieser in Figur 6 dargestellten Variante der Vorrichtung 1 kann somit vorgesehen sein, dass die Füllstandshöhe h in der Ausleseeinheit 11 und/oder in der Schwimmeinheit 5 ermittelt wird.

Die Ausgestaltung der Sendeeinheit 14 der Taucheinheit 2 als Ultraschallsendeeinheit oder Lichtsignalsendeeinheit und das Vorsehen einer entsprechenden Empfangseinheit 16 an der Schwimmeinheit 5 hat insbesondere den Vorteil einer sicheren Übertragung durch die Flüssigkeit F hindurch, insbesondere auch bei einer großen Füllstandshöhe h und/oder bei einer Flüssigkeit F, welche stark dämpfend auf Funksignale wirken würde.

**Figur 7** zeigt schematisch einen Schaltplan der Taucheinheit 2 der Variante der Vorrichtung 1 gemäß Figur 6 und **Figur 8** zeigt schematisch einen Schaltplan der Schwimmeinheit 5 der Variante der Vorrichtung 1 gemäß Figur 6.

Die in Figur 7 dargestellte Taucheinheit 2 umfasst die Drucksensoreinheit 3, die insbesondere als Low-Power-Clock ausgebildete Uhr 17, einen Controller 18, die Batterie 19, welche auch wiederaufladbar sein kann, und die als Ultraschallsendeeinheit oder Lichtsignalsendeeinheit ausgebildete Sendeeinheit 14. Die Sendeeinheit 14 umfasst beispielsweise einen Ultraschall- bzw. LED-Treiber 20 und einen Modulator 21. Im dargestellten Beispiel ist eine LED der Sendeeinheit 14 dargestellt, welche entsprechend als Lichtsignalsendeeinheit ausgebildet ist. Bei einer als Ultraschallsendeeinheit ausgebildeten Sendeeinheit 14 wäre an Stelle der LED eine Ultraschallabstrahleinrichtung dargestellt. Die

**EP 4 001 170 B1**

Uhr 17 ist beispielsweise als Real Time Clock, d. h. als Echtzeituhr ausgebildet.

Die in Figur 8 dargestellte Schwimmeinheit 5 umfasst die weitere Drucksensoreinheit 6, einen weiteren Controller 22, die weitere Batterie 23, welche auch wiederaufladbar sein kann, die als Ultraschallempfangseinheit oder Lichtsignalempfangseinheit ausgebildete Empfangseinheit 16 und die als Funksendeeinheit ausgebildete weitere Sendeeinheit 15. Der weitere Controller 22 kann hier auch die Ermittlungseinheit bilden, falls die Füllstandshöhe h in der Schwimmeinheit 5 ermittelt wird.

Die Funktionsweise dieser Variante der Vorrichtung 1 ist beispielsweise wie folgt:

In einem Ruhezustand der Taucheinheit 2 arbeitet nur deren Uhr 17, wodurch ein sehr geringer Energieverbrauch erreicht wird. Beispielsweise kann die Uhr 17 mit einem Strom kleiner als 1 μA betrieben werden. Mit einem, vorteilhafterweise frei programmierbaren, Takt von beispielsweise einer Sekunde bis zu einer Minute sendet die Uhr 17 ein so genanntes wake-up-Signal, d. h. ein Aufwach- und/oder Aktivierungssignal, an den Controller 18, woraufhin dieser aktiv wird. Die Drucksensoreinheit 3 misst nun den Druck und der Controller 18 gibt den ermittelten Druckwert an die Sendeeinheit 14 weiter. Dies erfolgt in sehr kurzer Zeit, beispielsweise innerhalb von weniger als 100 ms.

Die Sendeeinheit 14 sendet den ermittelten Druckwert an die Schwimmeinheit 5. Beispielsweise sendet sie hierzu zunächst ein Wake-up-Signal, d. h. ein Aufwach- und/oder Aktivierungssignal. Durch den Empfang dieses Aufwach- und/oder Aktivierungssignals wird die Schwimmeinheit 5 zunächst aktiviert. Die Empfangseinheit 16 realisiert hierfür eine Wake-up-Funktion für die restliche Schaltung der Schwimmeinheit 5. Vor dieser Aktivierung ist beispielsweise nur die Empfangseinheit 16 der Schwimmeinheit 5 aktiv, um dieses Aufwach- und/oder Aktivierungssignal empfangen zu können. Dadurch wird ein sehr geringer Energieverbrauch der Schwimmeinheit 5 erreicht. Die Empfangseinheit 16 ist hierzu vorteilhafterweise ein Low-Power-Empfänger, d. h. insbesondere eine Empfangseinheit 16 mit niedrigem Energieverbrauch. Nach dem Aufwach- und/oder Aktivierungssignal sendet die Sendeeinheit 14 der Taucheinheit 2 den ermittelten Druckwert, welcher von der Empfangseinheit 16 der Schwimmeinheit 5 empfangen wird. Gleichzeitig misst die weitere Drucksensoreinheit 6 der Schwimmeinheit 5 einen Druckwert.

Entweder berechnet nun der weitere Controller 22 der Schwimmeinheit 5 als Ermittlungseinheit aus diesen Druckwerten der Taucheinheit 2 und der Schwimmeinheit 5 die Füllstandshöhe h, welche danach mittels der weiteren Sendeeinheit 15 der Schwimmeinheit 5 an die Ausleseeinheit 11 übermittelt wird, oder die ermittelten Druckwerte der Taucheinheit 2 und der Schwimmeinheit 5 werden mittels der weiteren Sendeeinheit 15 der Schwimmeinheit 5 an die Ausleseeinheit 11 übertragen und die Füllstandshöhe h wird aus diesen Druckwerten in der Ausleseeinheit 11 ermittelt, wozu die Ausleseeinheit 11 eine entsprechende Ermittlungseinheit aufweist.

Der weitere Controller 22 der Schwimmeinheit 5 kann optional auch als ein Logger, auch als Datenlogger bezeichnet, für beide Drucksensoreinheiten 3, 6 vorgesehen sein, insbesondere um ein Datenpaket, umfassend insbesondere mehrere mittels der Drucksensoreinheiten 3, 6 ermittelte Druckwerte, zunächst zu sammeln und dann dieses Datenpaket an die Ausleseeinheit 11 zu senden, zum Beispiel auf eine Anforderung der Ausleseeinheit 11 an diese zu senden. Der weitere Controller 22 weist in diesem Fall hierfür einen ausreichend großen Datenspeicher auf, insbesondere mit einer Speichergröße von mehr als 1 Mbyte. Des Weiteren umfasst in diesem Fall vorteilhafterweise die Taucheinheit 2 und/oder die Schwimmeinheit 5 eine Echtzeituhr (Real Time Clock), insbesondere umfasst vorteilhafterweise zumindest die Taucheinheit 2 eine Echtzeituhr. Beispielsweise ist die Uhr 17 als diese Echtzeituhr ausgebildet.

Somit weist in diesem Fall die Taucheinheit 2 die Echtzeituhr auf und die Schwimmeinheit 5 weist die Speichereinheit in Form des weiteren Controllers 22 auf, insbesondere zur Speicherung von ermittelten Druckwerten, insbesondere zusammen mit einem jeweiligen Ermittlungszeitpunkt. Vorteilhafterweise ermittelt dann die Taucheinheit 2 mittels ihrer Drucksensoreinheit 3 mindestens einen Druckwert und mittels ihrer Echtzeituhr den Zeitpunkt der Ermittlung dieses Druckwerts und sendet diese Daten, vorteilhafterweise zusammen mit ihrer eindeutigen Identifikation, an die Schwimmeinheit 5. Die Empfangseinheit 16 der Schwimmeinheit 5 aktiviert bei dem Empfang dieser Daten und/oder eines vorhergehenden Aufwach- und/oder Aktivierungssignals der Taucheinheit 2 die restliche Schaltung, woraufhin mittels der weiteren Drucksensoreinheit 6 der Schwimmeinheit 5 mindestens ein Druckwert ermittelt wird. Die von der Taucheinheit 2 empfangenen Daten werden dann zusammen mit diesem von der Schwimmeinheit 5 ermittelten Druckwert und beispielsweise deren eindeutiger Identifikation im Controller 22 als Datenpaket gespeichert. Auf diese Weise können im zeitlichen Verlauf weitere derartige Daten im Controller 22 gespeichert werden, beispielsweise im selben Datenpaket oder in mehreren Datenpaketen. Der Controller 22 sendet dann das Datenpaket oder die mehreren Datenpakete an die Ausleseeinheit 11, zum Beispiel selbstständig, beispielsweise zu einem oder mehreren vorgegebenen Zeitpunkten, und/oder auf Anforderung durch die Ausleseeinheit 11.

Der Controller 18 und/oder der Controller 22 ist/sind insbesondere jeweils als ein Computer ausgebildet.

<u>BEZUGSZEICHENLISTE</u>

**11**

| 1 | Vorrichtung |
|---|---|
| 2 | Taucheinheit |
| 3 | Drucksensoreinheit |
| 4 | Tauchkörper |
| 5 | Schwimmeinheit |
| 6 | weitere Drucksensoreinheit |
| 7 | Schwimmkörper |
| 8 | Gasblase |
| 9 | Material |
| 10 | Schwimmring |
| 11 | Ausleseeinheit |
| 12 | Antenne |
| 13 | weitere Antenne |
| 14 | Sendeeinheit |
| 15 | weitere Sendeeinheit |
| 16 | Empfangseinheit |
| 17 | Uhr |
| 18 | Controller |
| 19 | Batterie |
| 20 | Treiber |
| 21 | Modulator |
| 22 | weiterer Controller |
| 23 | weitere Batterie |

| B | Behälter |
|---|---|
| BB | Boden |
| F | Flüssigkeit |
| *h* | Füllstandshöhe |
| ho | Höhe unterhalb der Oberfläche |
| hu | Höhe oberhalb des Bodens |
| O | Oberfläche |

**Patentansprüche**

1. Vorrichtung (1) zur Ermittlung eines Füllstands einer Flüssigkeit (F) in einem Behälter (B), umfassend eine Taucheinheit (2) mit einer Drucksensoreinheit (3) und einer Sendeeinheit (14) und eine Schwimmeinheit (5) mit einer weiteren Drucksensoreinheit (6) und einer als eine Funksendeeinheit ausgebildeten weiteren Sendeeinheit (15), **dadurch gekennzeichnet, dass** die weitere Drucksensoreinheit (6) an oder in einem Schwimmkörper (7) der Schwimmeinheit (5) derart angeordnet ist, dass sie bei in der Flüssigkeit (F), für deren Füllstandsermittlung die Vorrichtung (1) vorgesehen ist, angeordneter Schwimmeinheit (5) unter der Oberfläche (O) der Flüssigkeit (F) angeordnet ist, wobei

   - die Sendeeinheit (14) als eine Ultraschallsendeeinheit ausgebildet ist und die Schwimmeinheit (5) eine als Ultraschallempfangseinheit ausgebildete Empfangseinheit (16) aufweist,
   oder
   - die Sendeeinheit (14) als eine Lichtsignalsendeeinheit ausgebildet ist und die Schwimmeinheit (5) eine als Lichtsignalempfangseinheit ausgebildete Empfangseinheit (16) aufweist.

2. Vorrichtung (1) nach Anspruch 1, umfassend eine Ausleseeinheit (11).

3. Vorrichtung (1) nach einem der vorhergehenden Ansprüche, wobei die Schwimmeinheit (5) oder die Ausleseeinheit (11) eine Ermittlungseinheit zur Ermittlung einer Füllstandshöhe (h) der Flüssigkeit (F) in dem Behälter (B) aus einem mittels der Drucksensoreinheit (3) der Taucheinheit (2) ermittelten Druckwert und einem mittels der weiteren Drucksensoreinheit (6) der Schwimmeinheit (5) ermittelten Druckwert umfasst.

4. Vorrichtung (1) nach einem der vorhergehenden Ansprüche, wobei die als Funksendeeinheit ausgebildete weitere Sendeeinheit (15) der Schwimmeinheit (5) eine Bluetooth Low Energy-Funksendeeinheit ist.

**5.** Vorrichtung (1) nach einem der vorhergehenden Ansprüche,
wobei die Drucksensoreinheit (3) und/oder die weitere Drucksensoreinheit (6) als ein MEMS-Sensor ausgebildet ist.

**6.** Vorrichtung (1) nach einem der vorhergehenden Ansprüche,
wobei die Taucheinheit (2) und/oder die Schwimmeinheit (5) zumindest bereichsweise aus einem magnetisierbaren Material ausgebildet sind/ist, insbesondere aus einem magnetisierbaren Metall.

**7.** Vorrichtung (1) nach einem der vorhergehenden Ansprüche,
wobei die Schwimmeinheit (5) zumindest teilweise mit einem Gas oder Gasgemisch, insbesondere Luft, gefüllt ist.

**8.** Vorrichtung (1) nach einem der vorhergehenden Ansprüche,
wobei die Taucheinheit (2) und/oder die Schwimmeinheit (5) eine Echtzeituhr und eine Speichereinheit zur Speicherung von ermittelten Druckwerten zusammen mit einem jeweiligen Ermittlungszeitpunkt aufweisen.

## Claims

**1.** Apparatus (1) for determining a fill level of a liquid (F) in a container (B), comprising a dipping unit (2) with a pressure sensor unit (3) and a transmission unit (14), and a floating unit (5) with a further pressure sensor unit (6) and a further transmission unit (15) in the form of a radio transmission unit,
**characterized in that** the further pressure sensor unit (6) is arranged at or in a floating body (7) of the floating unit (5) in a manner such that it is arranged below the surface (O) of the liquid (F) when the floating unit (5) is arranged in the liquid (F) for whose fill level determination the apparatus (1) is provided, wherein

- the transmission unit (14) is in the form of an ultrasonic transmission unit and the floating unit (5) has a reception unit (16) in the form of an ultrasonic reception unit,
or
- the transmission unit (14) is in the form of a light signal transmission unit and the floating unit (5) has a reception unit (16) in the form of a light signal reception unit.

**2.** Apparatus (1) according to Claim 1, comprising a read unit (11).

**3.** Apparatus (1) according to either of the preceding claims,
wherein the floating unit (5) or the read unit (11) comprises a determination unit for determining a fill level height (h) of the liquid (F) in the container (B) from a pressure value determined by means of the pressure sensor unit (3) of the dipping unit (2) and a pressure value determined by means of the further pressure sensor unit (6) of the floating unit (5).

**4.** Apparatus (1) according to any of the preceding claims,
wherein the further transmission unit (15) of the floating unit (5), which is in the form of a radio transmission unit, is a Bluetooth low energy radio transmission unit.

**5.** Apparatus (1) according to any of the preceding claims,
wherein the pressure sensor unit (3) and/or the further pressure sensor unit (6) is in the form of a MEMS sensor.

**6.** Apparatus (1) according to any of the preceding claims,
wherein the dipping unit (2) and/or the floating unit (5) are/is made at least in sections from a magnetizable material, in particular from a magnetizable metal.

**7.** Apparatus (1) according to any of the preceding claims,
wherein the floating unit (5) is filled at least partially with a gas or gas mixture, in particular air.

**8.** Apparatus (1) according to any of the preceding claims,
wherein the dipping unit (2) and/or the floating unit (5) have a real-time clock and a storage unit for storing determined pressure values together with a respective determination time point.

# EP 4 001 170 B1

**Revendications**

1. Dispositif (1) de détermination d'un niveau de remplissage d'un liquide (F) dans un récipient (B), ledit dispositif comprenant une unité d'immersion (2) pourvue d'une unité formant capteur de pression (3) et d'une unité d'émission (14) et une unité flottante (5) pourvue d'une autre unité formant capteur de pression (6) et d'une autre unité d'émission (15) conçue comme unité d'émission radio,
   **caractérisé en ce que** l'autre unité formant capteur de pression (6) est disposée sur ou dans un corps flottant (7) de l'unité flottante (5) de façon à être disposée au-dessous de la surface (O) du liquide (F) lorsque l'unité flottante (5) est disposée dans le liquide (F) dont le niveau de remplissage doit être déterminé par le dispositif (1),

   - l'unité d'émission (14) étant conçue comme une unité d'émission d'ultrasons et l'unité flottante (5) comportant une unité de réception (16) conçue comme une unité de réception d'ultrasons,
   ou
   - l'unité d'émission (14) étant conçue comme une unité d'émission de signaux lumineux et l'unité flottante (5) comportant une unité de réception (16) conçue comme une unité de réception de signaux lumineux.

2. Dispositif (1) selon la revendication 1, comprenant une unité de lecture (11).

3. Dispositif (1) selon l'une des revendications précédentes,
   l'unité flottante (5) ou l'unité de lecture (11) comprenant une unité de détermination destinée à déterminer une hauteur de remplissage (h) du liquide (F) dans le récipient (B) à partir d'une valeur de pression déterminée au moyen de l'unité formant capteur de pression (3) de l'unité d'immersion (2) et d'une valeur de pression déterminée au moyen de l'autre unité formant capteur de pression (6) de l'unité flottante (5).

4. Dispositif (1) selon l'une des revendications précédentes,
   l'autre unité d'émission (15), conçue comme une unité d'émission radio, de l'unité flottante (5) étant une unité d'émission radio Bluetooth Low Energy.

5. Dispositif (1) selon l'une des revendications précédentes,
   l'unité formant capteur de pression (3) et/ou l'autre unité formant capteur de pression (6) étant conçues comme un capteur MEMS.

6. Dispositif (1) selon l'une des revendications précédentes,
   l'unité d'immersion (2) et/ou l'unité flottante (5) étant formées au moins par zones à partir d'une matière magnétisable, en particulier d'un métal magnétisable.

7. Dispositif (1) selon l'une des revendications précédentes,
   l'unité flottante (5) étant au moins partiellement remplie d'un gaz ou d'un mélange de gaz, en particulier d'air.

8. Dispositif (1) selon l'une des revendications précédentes,
   l'unité d'immersion (2) et/ou l'unité flottante (5) comportant une horloge en temps réel et une unité de mémorisation destinée à mémoriser des valeurs de pression déterminées conjointement avec un instant de détermination respectif.

FIG 1

FIG 2

FIG 3

FIG 4

FIG 5

FIG 6

FIG 7

FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 210953010 U
- CN 107576314 A

- US 2013054159 A1